# EUROPÄISCHE PATENTSCHRIFT

(11) **EP 0 525 595 B1**
(45) Veröffentlichungstag und Bekanntmachung des Hinweises auf die Patenterteilung: **27.09.1995**
(21) Anmeldenummer: 92112464.0
(22) Anmeldetag: 21.07.1992
(51) Int. Cl.: B60L 5/20

(54) **Überwachungseinrichtung für Stromabnehmerschleifleisten**
Monitoring device for a current collector sliding strip
Dispositif de surveillance pour pièces de frottement de collecteur de courant

(30) Priorität: 26.07.1991 AT 1496/91
(43) Veröffentlichungstag der Anmeldung: 03.02.1993
(73) Patentinhaber: SIEMENS AKTIENGESELLSCHAFT, 80333 München (DE)
(72) Erfinder: Grondinger, Günter, A-1235 Wien (AT); Müller, Georg, Dipl.-Ing., A-1120 Wien (AT)

(56) Entgegenhaltungen:
- EP-A- 0 269 307
- DE-A- 3 147 453
- DE-U- 8 803 377

## Beschreibung

Die Erfindung betrifft eine Überwachungseinrichtung für Stromabnehmerschleifleisten gemäß Oberbegriff des Anspruchs 1.

Eine derartige Einrichtung ist aus der DE-A 31 47 453 bekannt. Sie wird bei Stromabnehmern für streckengebundene Elektrofahrzeuge, wie an Oberleitungen fahrenden Lokomotiven, Straßenbahnen, Omnibussen oder dergleichen eingesetzt. Dabei dient sie dem Erkennen eines erforderlichen Schleifelementenwechsels des Stromabnehmers. Bei Zerstörung des an der vorgegebenen Abriebgrenze des Schleifelementes eingebetteten Lichtleiters wird ein Warnsignal erzeugt, das im Fahrstand des Elektrofahrzeugs anzeigt, daß das Schleifelement ausgewechselt werden muß. Die bekannte Erfindung liefert also nur ein Signal, wenn ein Austausch des Schleifelementes unmittelbar notwendig ist. Die darüberhinaus erforderliche laufende Kontrolle des Schleifelementes wird nach dieser Schrift vom Wartungspersonal nach wie vor visuell vorgenommen.

Der Erfindung liegt die Aufgabe zugrunde, diese laufende Kontrolle des Schleifelementes zu erleichtern. Dies wird erfindungsgemäß mit einer Überwachungseinrichtung gemäß dem Anspruch 1 gelöst.

Mit der erfindungsgemäßen Überwachungseinrichtung wird durch entsprechende Auswertung der Lichtsignale zu jedem Zeitpunkt eine Aussage über den aktuellen Zustand des Schleifelementes getroffen. Das ermöglicht genauere Prognosen über die voraussichtliche weitere Lebensdauer des Schleifelementes. Überraschend hohe Verschleißerscheinungen können ebenso festgestellt werden, wie auftretende Brüche oder Risse.

Eine vorteilhafte Ausgestaltung der Erfindung sieht vor, daß die Lichtsender im Impulsbetrieb arbeiten. Der Impulsbetrieb verringert den Energiebedarf der Lichtsender. Des weiteren wird die Lebensdauer der Lichtsender erhöht. Darüberhinaus läßt sich der Impulsbetrieb zu einer Fehlerüberwachung der Lichtempfänger nutzen.

Aufgrund des fortgeschrittenen Entwicklungsstandes der Technologie der Leuchtdioden ist es günstig, die Lichtsender mittels Leuchtdioden aufzubauen.

Eine Verringerung des Realisierungsaufwands bringt eine Ausgestaltung der Erfindung gemäß Anspruch 4 mit sich.

Vorteilhaft ist es weiterhin, wenn die Erfindung gemäß Anspruch 5 ausgestaltet ist.

Diese Ausgestaltung ermöglicht eine weitere Reduzierung des Energiebedarfs und erhöht zudem die Lebensdauer der Lichtsender, ohne daß die Überwachungsinformation über den Verschleißzustand der Stromabnehmerschleifleiste praktisch beeinträchtig wird.

Die Erfindung wird anhand zweier Figuren näher erläutert. Es zeigen:
FIG 1 eine beispielhafte Überwachungseinrichtung und
FIG 2 ein beispielhaftes Schleifelement.

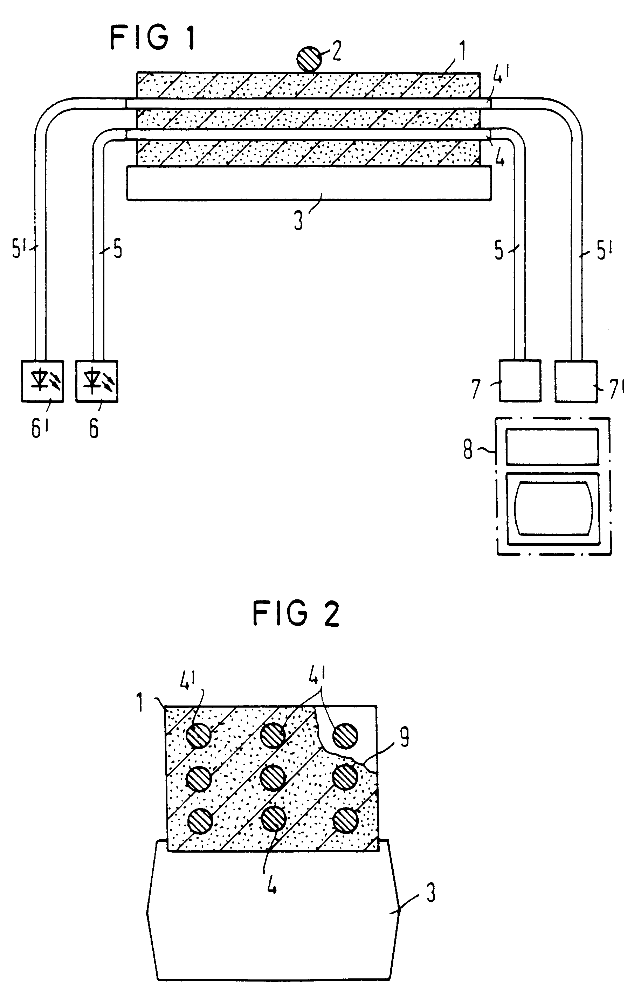

Die Überwachungseinrichtung nach FIG 1 besteht aus einer Stromabnehmerschleifleiste 1, die auf einem Trägerkörper 3 befestigt ist und auf der eine Fahrleitung 2 aufliegt. In die Stromabnehmerschleifleiste 1 sind zwei Lichtleiter 4, 4' eingebettet, welche über Verbindungslichtleiter 5, 5' mit Lichtsendern 6, 6' und Lichtempfängern 7, 7' verbunden sind. Die Ausgänge der Lichtempfänger 7, 7' sind mit einer Auswerte- und Anzeigevorrichtung 8 verbunden.

Die Funktion der Überwachungseinrichtung ist wie folgt: Der von den Lichtsendern 6, 6' abgegebene Lichtstrom wird über die Verbindungslichtleiter 5, 5' den in der Stromabnehmerschleifleiste 1 eingebetteten Lichtleitern 4,4' zugeführt, durch diese übertragen und gelangt über Verbindungslichtleiter 5, 5' zu den Lichtempfängern 7, 7'. Der Empfang des Lichtstroms wird durch die Auswerte- und Anzeigevorrichtung 8 ausgewertet und angezeigt.

Die Anzeige kann im einfachsten Fall darin bestehen, daß nur der Zustand der Lichtleiter durch Anzeigelämpchen dargestellt ist. In diesem Fall besteht die Anzeige also aus zwei übereinander angeordneten Lämpchen, von denen das obere mit seinem Leuchten den intakten Zustand des oberen Lichtleiters anzeigt und das untere Lämpchen den Zustand des unteren Lichtleiters darstellt. Ein nicht leuchtendes Lämpchen weist darauf hin, daß der entsprechende Lichtleiter beschädigt ist.

Es ist aber auch möglich, durch eine entsprechende Ausgestaltung der Auswerte- und Anzeigevorrichtung - beispielsweise mit an sich bekannten Logikelementen - die Information für das Bedienungspersonal wesentlich umfangreicher zu gestalten. So kann beispielsweise bei Einsatz mehrerer Lichtleiter 6, 6' eine Auswertung dahingehend erfolgen, daß dem Bedienungspersonal eine Vorhersage über die noch zu fahrenden Kilometer bis zu dem voraussichtlichen Zeitpunkt geboten wird, zu dem ein Austausch der Stromabnehmerschleifleiste notwendig ist. Dies ist besonders dann vorteilhaft, wenn die betreffenden Fahrzeuge bei ihren Einsätzen üblicherweise große Entfernungen zurücklegen.

Im Fahrbetrieb wird die Stromabnehmerschleifleiste 1, die üblicherweise aus einem weichen graphithaltigen Material besteht, durch die darauf gleitende Fahrleitung 2 verschliffen. Wenn die Abnutzung einen bestimmten Grad erreicht, wird der obere Lichtleiter 4 durchgetrennt und der durch diesen Lichtleiter geführte Lichtstrom unterbrochen. Dies wird durch die Auswerte- und Anzeigevorrichtung registriert und angezeigt.

Das Bedienpersonal sieht daraus, daß die Abnutzung der Stromabnehmerschleifleiste 1 einen gewissen, allerdings noch nicht kritischen Grad erreicht hat. Es kann daher mit dem Auswechseln der Stromabnehmerschleifleiste 1 gewartet werden, bis nach Abtrennung des zweiten unteren Lichtleiters 4 ein kritischer Abrieb erreicht wird. Aufgrund besonderer Entscheidungsverfahren kann allerdings auch ein frühzeitiger Austausch der Stromabnehmerschleifleiste 1, beispielsweise bei einer routinemäßigen Wartung des Fahrzeuges veranlaßt werden.

FIG 2 zeigt einen Schnitt durch eine Stromabnehmerschleifleiste 1 der senkrecht zur Lage der Lichtleiter 4 geführt ist. Die dargestellte beispielhafte Stromabnehmerschleifleiste 1 auf einem Trägerkörper 3 beinhaltet neun Lichtleiter 4, die in unterschiedlicher Lage in die Stromabnehmerschleifleiste 1 eingebettet sind. Durch die Anordnung dieser Lichtleiter ist eine genauere Auswertung des Zustands der Stromabnehmerschleifleiste 1 möglich. So kann ein Bruch von der Art, wie er durch die Bruchlinie 9 in der Figur angedeutet ist, festgestellt werden. Durch die erfindungsgemäße Anordnung mehrerer Lichtleiter 4 in unterschiedlicher Lage in der Stromabnehmerschleifleiste 1 können genaue Aussagen über den verschleißabhängigen Zustand der Stromabnehmerschleifleiste 1 getroffen werden, ohne daß dazu eine visuelle Kontrolle des Schleifelementes notwendig ist. Diese Kontrolle ist umständlich und langwierig, da es dazu notwendig ist, auf das Dach des Fahrzeuges zu klettern.

## Patentansprüche

1. Überwachungseinrichtung für Stromabnehmerschleifleisten mit einem ersten Lichtleiter (4), der in der Stromabnehmerschleifleiste (1) parallel zu ihrer Längsachse eingebettet ist, mit einem Lichtsender (6), der über einen Verbindungslichtleiter (5) mit einem Ende des ersten Lichtleiters verbunden ist, und einem Lichtempfänger (7), der über einen weiteren Verbindungslichtleiter (5) mit dem anderen Ende des ersten Lichtleiters (4) verbunden ist,
**dadurch gekennzeichnet,**
daß in die Stromabnehmerschleifleiste (1) weitere Lichtleiter (4') eingebettet sind, die durch weitere Verbindungslichtleiter (5') jeweils mit einem weiteren Lichtsender (6') und einem weiteren Lichtempfänger (7') verbunden sind und daß alle Lichtempfänger (7, 7') mit einer Auswerte- und An-zeigevorrichtung (8) zur Darstellung des verschleißabhängigen Zustandes der Stromabnehmerschleifleiste (1) verbunden sind.

2. Überwachungseinrichtung nach Anspruch 1,
**dadurch gekennzeichnet,** daß die Lichtsender (6, 6') im Impulsbetrieb arbeiten.

3. Überwachungseinrichtung nach Anspruch 1 oder 2,
**dadurch gekennzeichnet,** daß die Lichtsender (6, 6') mittels Leuchtdioden aufgebaut sind.

4. Überwachungseinrichtung nach einem der Ansprüche 1 bis 3, **dadurch gekennzeichnet,** daß alle Lichtsender (6, 6') als eine einzelne Lichtquelle ausgebildet sind.

5. Überwachungseinrichtung nach einem der Ansprüche 1 bis 3, **dadurch gekennzeichnet,** daß zu jedem Zeitpunkt nur eine, in Abhängigkeit vom Verschleißzustand der Stromabnehmerschleifleiste (1) gewählte Teilmenge der Lichtsender (6, 6') und Lichtempfänger (7, 7') arbeitet, und daß die Auswahl der Teilmenge durch die Auswerte- und Anzeigevorrichtung erfolgt.

## Claims

1. Monitoring device for current collector sliding strips having a first light guide (4) which is embedded in the current collector sliding strip (1) parallel to the longitudinal axis thereof, having a light transmitter (6) which is connected to one end of the first light guide by way of a connecting light guide (5), and having a light receiver (7) which is connected to the other end of the first light guide (4) by way of a further connecting light guide (5), characterised in that embedded into the current collector sliding strip (1) there are further light guides (4') which are each connected to a further light transmitter (6') and to a further light receiver (7') by means of further connecting light guides (5'), and in that all the light receivers (7, 7') are connected to an evaluating and display arrangement (8) for presentation of the wear-dependent state of the current collector sliding strip (1).

2. Monitoring device according to claim 1, characterised in that the light transmitters (6, 6') operate in pulsed mode.

3. Monitoring device according to claim 1 or 2, characterised in that the light transmitters (6, 6') are set up by means of light-emitting diodes.

4. Monitoring device according to one of the claims 1 to 3, characterised in that all the light transmitters (6, 6') are formed as a single light source.

5. Monitoring device according to one of the claims 1 to 3, characterised in that only one subset of the light transmitters (6, 6') and light receivers (7, 7'), selected as a function of the state of wear of the current collector sliding strip (1), operates at any instant and in that the subset is selected by means of the evaluating and display arrangement.

## Revendications

1. Dispositif de contrôle de bandes de frottement d'un pantographe, comportant une première fibre optique (4), qui est incorporée a la bande (1) de frottement du pantographe parallèlement à son axe longitudinal, un émetteur optique (6), qui est relié par l'intermédiaire d'une fibre optique (5) de liaison à une extrémité de la première fibre optique, et un récepteur optique (7), qui est relié par l'intermédiaire d'une autre fibre optique (5) de liaison à l'autre extrémité de la première fibre optique (4),
caractérisé en ce que
d'autres fibres optiques (4'), qui sont reliées par d'autres fibres optiques (5') de liaison chacune à un autre émetteur optique (6') et à un autre récepteur optique (7'), sont incorporées à la bande (1) de frottement du pantographe et tous les récepteurs optiques (7, 7') sont reliés à un dispositif (8) d'exploitation et d'affichage destiné à représenter l'état d'usure de la bande (1) de frottement du pantographe.

2. Dispositif de contrôle suivant la revendication 1, caractérisé en ce que les émetteurs optiques (6,6') fonctionnent en mode impulsionnel.

3. Dispositif de contrôle suivant la revendication 1 ou 2, caractérisé en ce que les émetteurs optiques (6,6') sont constitués au moyen de diodes électroluminescentes.

4. Dispositif de contrôle suivant l'une des revendications 1 à 3, caractérisé en ce que tous les émetteurs optiques (6,6') sont sous la forme d'une source lumineuse unique.

5. Dispositif de contrôle suivant l'une des revendications 1 à 3, caractérisé en ce qu'à chaque instant, il ne fonctionne qu'un sous-ensemble des émetteurs optiques (6,6') et récepteurs optiques (7,7'), qui est choisi en fonction de l'usure de la bande (1) de frottement du pantographe et le choix du sous-ensemble s'effectue par le dispositif d'exploitation et d'affichage.
